# EUROPEAN PATENT APPLICATION

(11) **EP 3 343 562 A1**
(43) Date of publication of application: **04.07.2018**
(21) Application number: 17210752.6
(22) Date of filing: 27.12.2017
(51) Int. Cl.: G11B 27/28, G11B 27/031, G11B 27/34, G06F 3/0488, G06F 3/0484

(54) **IMAGE MANAGEMENT METHOD AND APPARATUS**

(30) Priority: 29.12.2016 CN 201611250032
(71) Applicant: Beijing Xiaomi Mobile Software Co., Ltd., Beijing 100085 (CN)
(72) Inventor: WANG, Qian, Beijing, 100085 (CN); LIN, Binbin, Beijing, 100085 (CN)
(74) Representative: Hughes, Andrea Michelle

(57) **Abstract**

The present disclosure provides a method and apparatus for managing an image. According to an example of the method, when an aggregation instruction for a plurality of images is detected, the images are aggregated to obtain an image group. The image group includes similar images satisfying, for example, an aggregation condition. A group tag of the image group is determined, and the image group is displayed based on the group tag.

## Description

### CROSS REFERENCE TO RELATED APPLICATION

This patent application claims the priority to the Chinese Patent Application No. 201611250032.2 entitled "IMAGE MANAGEMENT METHOD AND APPARATUS" filed on December 29, 2016.

### TECHNICAL FIELD

The present disclosure generally relates to the field of mobile device technologies, and more particularly, to an image management method and apparatus.

### BACKGROUND

As mobile devices more and more trend to intelligentization, users may use the mobile devices to implement various functions, for example, playing games, chatting, photographing pictures, and so on. One of the most common application functions is a camera function integrated on the mobile devices. Through the camera function, the users may photograph interesting things at any time and any place. Generally, the mobile devices save and display pictures according to time sequence of photographing these pictures. When there are more pictures in the mobile devices, the users need to spend longer time browsing or searching pictures.

### SUMMARY

Examples of the present disclosure provide a method and apparatus for managing an image and a mobile device to solve the problem that a user needs to spend longer time browsing or searching a picture.

According to a first aspect of the Examples of the present disclosure, there is provided a method of managing an image, which may include:
aggregating, by a mobile device, a plurality of images in response to an aggregation instruction, so as to aggregate similar images among the plurality of images into an image group; and
displaying, by the mobile device, the image group.

According to a second aspect of the Examples of the present disclosure, there is provided an apparatus for managing an image, which may include:
aggregating module configured to aggregate a plurality of images in response to an aggregation instruction, so as to aggregate similar images among the plurality of images into an image group; and
first display module configured to display the image group.

The technical solution provided by the examples of the present disclosure may include the following beneficial effects: an image group may be obtained by performing aggregation operation on a plurality of images when detecting an aggregation instruction for the plurality of images, and a group tag of the image group is displayed. In this way, it is effectively avoided the problem that, in the related technologies, displaying all pictures in an image folder according to time sequence may cause a lower efficiency of browsing the pictures by the user, time spent in browsing the pictures may be shortened for the user, and the user experience may be optimized.

It should be understood that the above general description and the detailed description below are merely exemplary and explanatory, and do not limit the present disclosure.

### BRIEF DESCRIPTION OF DRAWINGS

The accompanying drawings, which are incorporated in and constitute a part of this specification, illustrate examples consistent with the present disclosure and, together with the description, serve to explain the principles of the present disclosure.
FIG. 1A illustrates a flowchart of a method of managing an image according to an exemplary example.
FIG. 1B illustrates a schematic diagram of none-aggregation display of images according to an exemplary example.
FIG. 1C illustrates a schematic diagram of aggregation display of images according to an exemplary example.
FIG. 2A illustrates a flowchart of a method of managing an image according to another exemplary example.
FIG. 2B illustrates a schematic diagram of a an expanded image group according to an exemplary example.
FIG. 3A illustrates a flowchart of a method for determining similar images according to an exemplary example.
FIG. 3B illustrates a flowchart of a method for determining similar images according to another exemplary example.
FIG. 4 illustrates a structural block diagram of an apparatus for managing an image according to an exemplary example.
FIG. 5 illustrates a structural block diagram of an apparatus for managing an image according to another exemplary example.
FIG. 6 illustrates a structural block diagram of an apparatus for managing an image according to still another exemplary example.

### DETAILED DESCRIPTION

Reference will now be made in detail to exemplary examples, examples of which are illustrated in the accompanying drawings. When accompanying figures are mentioned in the following descriptions, the same numbers in different drawings represent the same or similar elements, unless otherwise represented. The implementations set forth in the following exemplary examples do not represent all implementations consistent with the present disclosure. Instead, they are merely examples of apparatuses and methods consistent with aspects related to the present disclosure as recited in the appended claims.

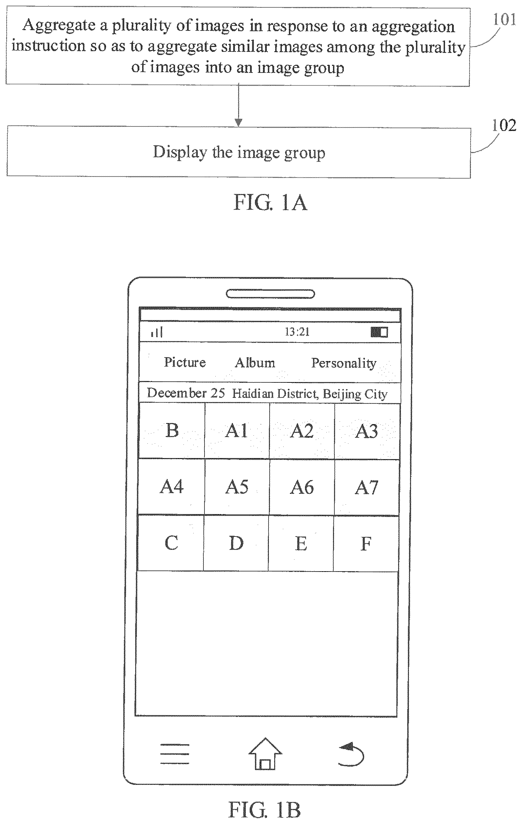

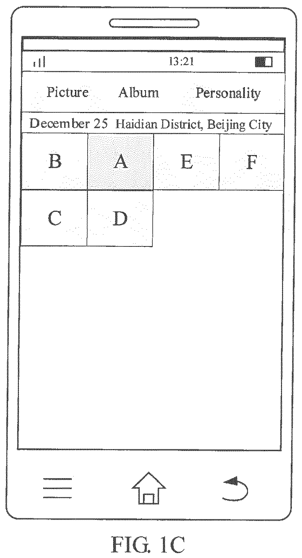

FIG. 1A illustrates a flowchart of a method of managing an image according to an exemplary example, FIG. 1B illustrates a schematic diagram of non-aggregation display of images according to an exemplary example, and FIG. 1C illustrates a schematic diagram of aggregation display of images according to an exemplary example. The method of managing an image may be used in a mobile device (such as a smart mobile phone or a tablet computer). As shown in FIG. 1A, the method of managing an image may include following blocks.

At block 101, the mobile device may aggregate a plurality of images in response to an aggregation instruction, so as to aggregate similar images among the plurality of images into an image group.

The aggregation instruction may be interpreted as an instruction for performing a pinch action, from the first image and the last image to an intermediate image, on the plurality of images. For example, all pictures for a certain activity may be aggregated.

For example, a user arbitrarily may select two images on a touch screen of the mobile device, and then the mobile device may determine that the user designates an aggregation operation on the two images and a plurality of images seriated between the two images when the user performs the pinch action from the two images to an intermediate image. For another example, the user may select a plurality of images on the touch screen, and then perform slip action similar to pinch on the touch screen. The mobile device may determine that the user designates the aggregation operation for the selected plurality of images. The plurality of images on which the aggregation operation is to be performed may be continuous images or may be discontinuous images.

In an example, the aggregation instruction also may be interpreted as an instruction for aggregating similar images.

When the mobile device generates more similar images, for example, all images photographed for a certain activity may be similar images, the user may likely trigger a preset operation of aggregating similar images via the touch screen or buttons, for example, a two-finger pinch and slip action performed by the user on the touch screen. When the user performs the preset operation, the mobile device may detect the aggregation instruction for aggregating a plurality of images.

At block 101, the images satisfying an aggregation condition may be similar images, or may be images among the images selected by the aggregation operation.

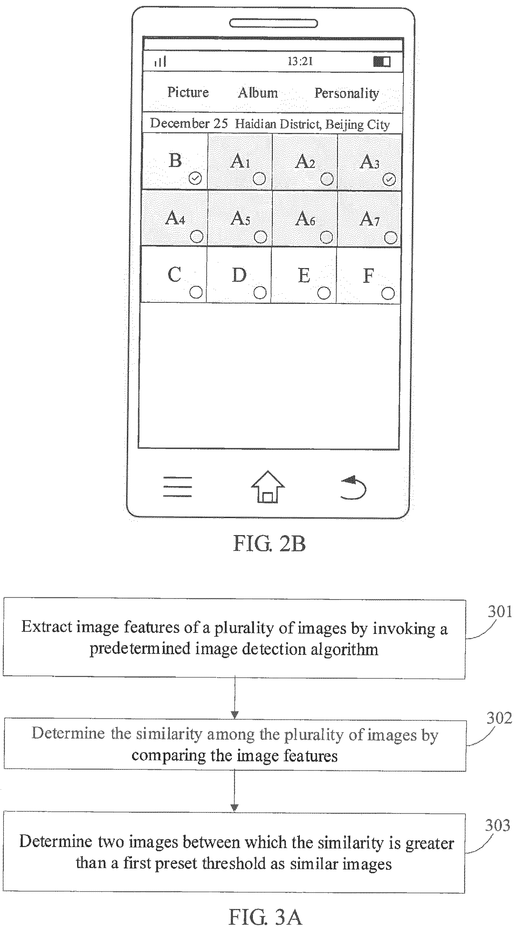

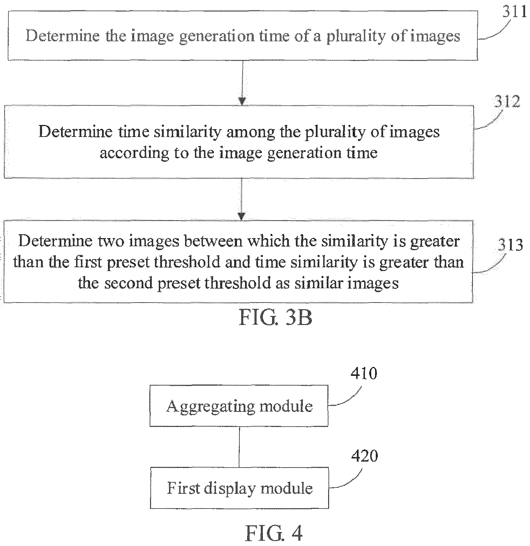

There may be multiple manners for defining the similar images, which may be selected by the user according to the actual situation. For example, images may be defined whether to be similar images according to types of the images (static images or dynamic images), contents of the images, and creation time of the images, etc. In one example, the similar images may be images similar in content, for example, images similar in image background and identical in image characters. The similar images may be determined according to the example as shown in FIG. 3A, which are not described in detail herein. In another example, the similar images also may be images similar in content and close in time, for example, images similar in image background, identical in image characters and photographed at the same day. The similar images may be determined according to the example as shown in FIG. 3B, which are not described in detail herein.

At block 101, aggregating the images may be interpreted as creating an image group and adding the images to be aggregated and satisfy the aggregation condition into the image group.

In one example, the image group may be an image set, and the image group may be displayed, in an image folder, in the form of a group tag of the image group. Referring to FIG. 1B, the images A₁, A₂, A₃, A₄, A₅, A₆, A₇ may be similar images. The image group A as shown in FIG. 1C may be obtained by aggregating the similar images A₁, A₂, A₃, A₄, A₅, A₆, A₇.

At block 102, the image group may be displayed.

In one example, the group tag of the image group may be displayed under the folder where the image group is, wherein the group tag of the image group may be configured to identify the image group.

In one example, the group tag may be any image in the image group, and the group tag may be fixed, for example, fixed as a first image in the image group. In another example, the group tag also may be a tag synthesized by all images in the image group. In still another example, the group tag may be dynamically changing. For example, the group tag may be sequentially set as each image in the image group according to a certain time interval, or the group tag may be randomly changed to be any image in the image group according to a certain time interval.

In one example, the group tag of the image group may be displayed in the folder according to a preset order. For example, the image group may be displayed in the foremost or backmost portion of the image folder, or the image group may be displayed in the image folder according to image generation time of an image included in the image group.

In this example, an image group may be obtained by aggregating the plurality of images, and the group tag of the image group may be displayed. In this way, it may be avoided the problem of low efficiency in user browsing pictures caused by displaying all pictures according to the time sequence, time of browsing pictures may be shortened for the user, and the user experience may be optimized.

The technical solution provided by the Examples of the present disclosure is illustrated by means of specific examples hereinafter.

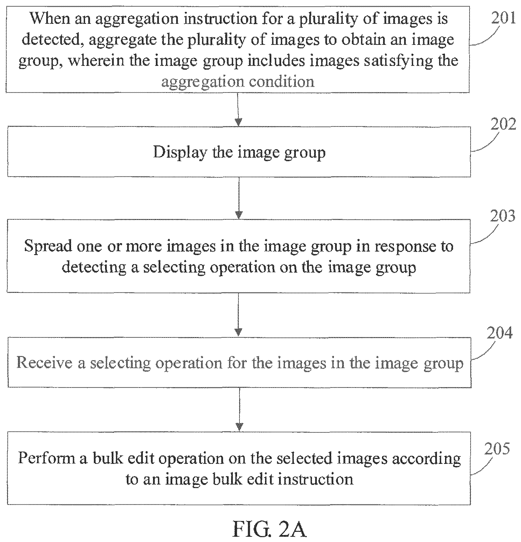

FIG. 2A illustrates a flowchart of an image management method according to another exemplary example; and FIG. 2B illustrates a schematic diagram of an expanded image group according to an exemplary example. The method is described taking a mobile device as an example. As shown in FIG. 2A, the method may include following blocks.

At block 201, when an aggregation instruction for a plurality of images is detected, the plurality of images may be aggregated to obtain an image group, wherein the image group may include images satisfying the aggregation condition.

In one example, the aggregation instruction for a plurality of images may be an instruction for performing a pinch action, from the first image and the last image to the intermediate image, on the plurality of images.

In still another example, the aggregation instruction for a plurality of images also may be interpreted as an instruction for aggregating similar images.

In one example, the plurality of images selected according to the aggregation instruction may be determined whether to be similar images, and the images determined as similar images may be aggregated. For example, when the determination result indicates that there are non-similar images among the plurality of images selected according to the aggregation instruction, the non-similar images may be reserved and displayed on the display interface. Here, the reserving and displaying the non-similar images on the display interface may include: together displaying the non-similar images and the group tag of the image group obtained by aggregating the similar images on the display interface. There may be a plurality of manners for displaying the non-similar images, which are not limited thereto.

At block 202, the image group may be displayed.

Description of block 202 may refer to description of block 102 as shown in FIG. 1A, which is not described in detail herein.

For example, the image group may be displayed using a preset picture as the group tag of the image group; the image group may be displayed using the group tag obtained by synthesizing images in the image group; the image group may be displayed by playing, in turn, the images in the image group by way of animation, in this case, the group tag of the image group may be dynamically changing in a specific order; and the image group may be displayed by randomly playing the images in the image group by way of animation, and in this case the group tag of the image group may be randomly dynamically changing.

At block 203, one or more image in the image group may be expanded in response to detecting a selecting operation on the image group.

The images in the image group may be expanded through the following manners.

In the first manner, the images in the image group may be expanded when receiving the user-triggered operation of clicking the image group.

The images in the image group may be selected and edited when expanding the images in the image group in response to the user-triggered operation of clicking the image group. Upon completion of editing, the expanding operation may be cancelled by clicking a preset position such as a blank position. A menu button used for aggregating and displaying the image group also may be displayed when expanding the images in the image group. Upon completion of editing, the expanded image group may be collapsed when receiving the operation of clicking the menu button by the user.

In the second manner, when a bulk edit mode is selected by the user clicking any image in the folder where the image group is, the images in the image group may be expanded when receiving the user-triggered operation of clicking the image group. In this case, the images in the image group may be edited in bulk.

In the third manner, when the bulk edit mode is selected by the user clicking any image in the folder where the image group is, the images in the image group may be automatically expanded so that it is convenient to edit, in bulk, the images in the image group.

In one example, a mode of expanding the images in the image group may be a pop-up floating layer mode, referring to FIG. 2B. In still another example, a mode of expanding the images in the image group also may be highlight background color display mode.

In one example, when the user triggers the operation of selecting an image in the image folder, for example, touching and holding an image, the mobile device may detect an instruction for editing an image in the image folder. Then, a radio button may be displayed at a preset position of all images in the folder such as a lower right corner. The user may select a corresponding image by using the radio button.

At block 204, a selecting operation for the images in the image group may be received.

At block 205, a bulk edit operation may be performed on the selected images according to an image bulk edit instruction.

In this example, when it is detected the operation of editing the images in the image folder, the images in the image group may be automatically expanded so that it is convenient for the user to edit the images in the image group, the operation of the user may be simplified, and the user experience may be improved.

FIG. 3A illustrates a flowchart of a method for determining similar images according to an exemplary example; and FIG. 3B illustrates a flowchart of a method for determining similar images according to another exemplary example. Taking a mobile device as an example, this example makes an exemplary description of the method provided by the examples of the present disclosure. As shown in FIG. 3A, the procedure of determining similar images according to image content may include the following blocks.

At block 301, image features of a plurality of images may be extracted by invoking a predetermined image detection algorithm.

In one example, the image feature of each image in the image group may be extracted according to the predetermined image detection algorithm, wherein the image feature may include a scenery feature or portrait feature in the image, and so on.

At block 302, the similarity among the plurality of images may be determined by comparing the image features.

In one example, the similarity between images may be calculated according to the image features using various image calculation algorithms well known to those skilled in the art.

At block 303, images between which the calculated similarity is greater than a first preset threshold may be determined as similar images.

In one example, the first preset threshold may be a higher numerical value, for example, 0.85. It may be determined whether two images are similar by comparing the similarity between the two images with the first preset threshold.

As shown in FIG. 3B, the procedure of determining similar images according to image content and image generation time may include following blocks.

At block 311, the image generation time of a plurality of images may be determined.

At block 312, time similarity among the plurality of images may be determined according to the image generation time.

In one example, the time similarity between images may be determined according to a time period to which the image generation time belongs. For example, the generation time of an image A is ten o'clock a.m., November 12, 2016, and the generation time of an image B is ten o'clock a.m., December 12, 2016. That is, the time period to which the image generation time of the image A belongs is within the middle ten days of November 2016, whereas the time period to which the image generation time of the image B belongs is within the middle ten days of December 2016. Therefore, the time similarity between the image A and the image B is lower.

In one example, the time period to which the image generation time belongs may be divided based on an image generation frequency. For example, when the image generation frequency is higher, for example, 100 images are generated every day, the division unit of the time period to which the image generation time belongs may be determined as a half day. Whereas when the image generation frequency is lower, for example, 10 images are generated every five days, the division unit of the time period to which the image generation time belongs may be determined as a half month. In one example, a magnitude of the time period to which the image generation time belongs may be a fixed value. For example, regardless of the generation frequency of an image in the image folder, the division unit of the time period may be determined as one day.

At block 313, two images between which the similarity is greater than the first preset threshold and time similarity is greater than the second preset threshold may be determined as similar images.

In this example, when the determination of similar images is performed, image features may be extracted via a predetermined image detection algorithm, then the similarity between the images may be determined according to the image features, and then the images between which the similarity is greater than the first preset threshold may be determined as similar images. In this way, it may be avoided that the mobile device aggregates and displays non-similar images, and further the user experience may be optimized. Furthermore, when determining similar images, it may be further determined which images are the similar images to be aggregated and displayed with reference to the image generation time. In this way, the similarity between to-be-aggregated images may be enhanced.

FIG. 4 illustrates a block diagram of an apparatus for managing an image according to an exemplary example, as shown in FIG.4, the apparatus for managing an image may include the following modules:
an aggregating module 410, configured to aggregate a plurality of images in response to an aggregation instruction, so as to aggregate similar images among the plurality of images into an image group; and
a first display module 420, configured to display the image group.

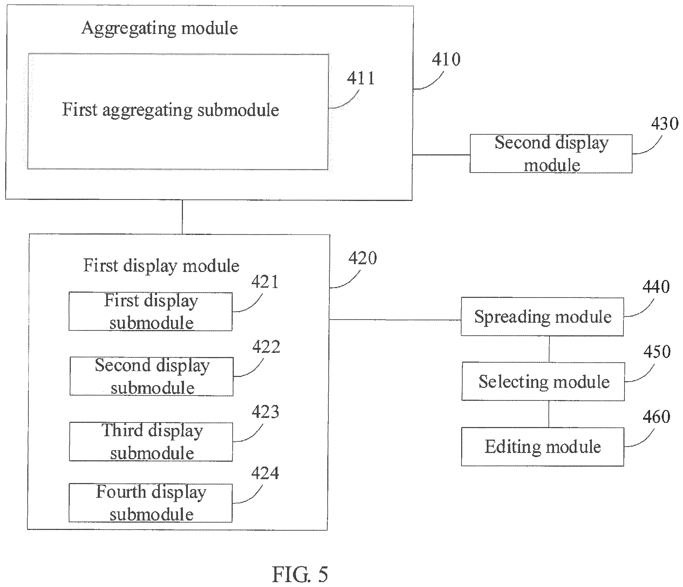

FIG. 5 schematically illustrates another structural block diagram of the apparatus for managing an image according to an exemplary example. As shown in FIG. 5, on the basis of the example as shown in FIG. 4, the aggregating module 410 may include:
a first aggregating submodule 411, configured to determine a similarity of the plurality of images selected according to the aggregation instruction, and form images among the plurality of images, which are determined as similar images based on the similarity, into the image group.

In one example, the plurality of images may include at least one of: continuous images; or images selected by a user.

In one example, the apparatus may further include:
a second display module 430, configured to reserve and display an image among the plurality of images not included in the image group on a display interface.

In one example, the aggregation instruction may include an instruction generated in response to a pinch action performed by the user on the plurality of images.

In one example, the pinch action may include a two-finger pinch and slip action performed by the user on a touch screen of the apparatus.

In one example, the first display module 420 may include:
a first display submodule 421, configured to determine a preset image as the group tag of the image group; or
a second display submodule 422, configured to synthesize the group tag of the image group using an image in the image group; or
a third display submodule 423, configured to sequentially select an image in the image group as the group tag of the image group; or
a fourth display submodule 424, configured to randomly select an image in the image group as the group tag of the image group.

In one example, the apparatus may further include:
an expand module 440, configured to expand one or more images in the image group in response to a selecting operation performed by the user on the image group;
a selecting module 450, configured to receive a selecting operation performed by the user on the images in the image group expanded by the expanding module 440; and
an editing module 460, configured to perform a bulk edit operation on the selected images according to a bulk edit instruction.

Implementations of functions and roles of units in the above apparatus are specifically seen in detail in implementations of corresponding blocks in the above methods, which are not unnecessarily elaborated any more herein.

Apparatus examples are basically corresponding to method examples, and thus method examples can serve as reference. Apparatus examples set forth above are merely exemplary, wherein units described as detached parts may be or not be detachable physically; parts displayed as units may be or not be physical units, i.e., either located at the same place, or distributed on a plurality of network units. Modules may be selected in part or in whole according to the actual needs to implement the solution of the present disclosure. It is conceivable and executable for those of ordinary skill in the art without creative labor.

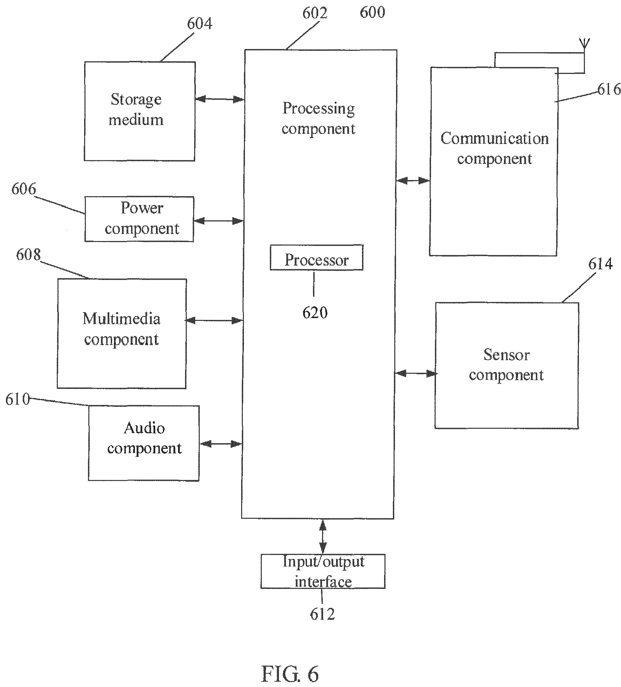

FIG. 6 illustrates a structural block diagram of an apparatus for managing an image according to an exemplary example. For example, the apparatus 600 may be a mobile device (such as a smart mobile phone or a tablet computer, and so on).

Referring to FIG. 6, the apparatus 600 may include one or more of the following components: a processing component 602, a storage medium 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, speech broadcast, data communications, and recording operations. The processing component 602 may include one or more processors 620 to execute instructions to perform all or part of the blocks in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The storage medium 604 is configured to store various types of data to support the operation of the apparatus 600. Examples of such data include instructions for any applications or methods operated on the apparatus 600, messages, images, etc. The storage medium 604 may be implemented using any type of volatile or nonvolatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power in the apparatus 600.

The multimedia component 608 includes a screen providing an output interface between the apparatus 600 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action.

The audio component 610 is configured to output and/or input an audio signal. For example, the audio component 610 includes a microphone ("MIC") configured to receive an external audio signal when the apparatus 600 is in an operation mode, such as a call mode, a recording mode, and a voice recognition mode. The received audio signal may be further stored in the storage medium 604 or transmitted via the communication component 616. In some examples, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For example, the sensor component 614 may detect the on/off state of the apparatus 600, relative positioning of components, for example, the components are the display and keypad of the apparatus 600; the sensor component 614 also may detect the position change of the apparatus 600 or a component thereof, the presence or absence of users' touch on the apparatus 600, the direction or acceleration/deceleration of the apparatus 600, and temperature variation of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some examples, the sensor component 614 may also include an acceleration sensor, a gyroscope sensor, a magnetic sensor, a proximity sensor, a pressure sensor, or a temperature sensor.

The communication component 616 is configured to facilitate communication, wired or wirelessly, between the apparatus 600 and other devices. The apparatus 600 may access a wireless network based on a communication standard, such as WiFi, 2G, or 3G, or a combination thereof. In an exemplary example, the communication component 616 receives a broadcast signal or broadcast associated information from an external broadcast management system via a broadcast channel. In an exemplary example, the communication component 616 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary examples, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the following method:
aggregating a plurality of images in response to an aggregation instruction, so as to aggregate similar images among the plurality of images into an image group; and
displaying the image group.

In exemplary examples, there is also provided a non-transitory machine-readable storage medium including instructions, such as included in the storage medium 604, executable by the processor 620 in the apparatus 600, for performing the above-described method. For example, the non-transitory computer-readable storage medium may be a ROM, a RAM, a CD-ROM, a magnetic tape, a floppy disc, an optical data storage device, and the like.

According to an example of the present disclosure, there is provided an image management method, including:
aggregating, by a mobile device, a plurality of images in response to an aggregation instruction so as to aggregate similar images among the plurality of images into an image group; and
displaying, by the mobile device, the image group.

In one example, the plurality of images include at least one of:
continuous images; and
images selected by a user.

In one example, aggregating the plurality of images so as to aggregate the similar images among the plurality of images into an image group includes:
determining, by the mobile device, a similarity of the plurality of images selected according to the aggregation instruction; and
forming, by the mobile device, images among the plurality of images, which are determined as similar images based on the similarity, into the image group.

In one example, the mobile device reserves and displays an image among the plurality of images not included in the image group on a display interface.

In one example, the aggregation instruction includes an instruction generated by the mobile device in response to a pinch action performed by a user on the plurality of images.

In one example, the pinch action comprises a two-finger pinch and slip action performed by the user on a touch screen of the mobile device.

In one example, displaying the image group includes:
determining, by the mobile device, a group tag of the image group; and
displaying, by the mobile device, the image group based on the group tag.

In one example, determining a group tag of the image group includes at least one of:
determining, by the mobile device, a preset image as the group tag of the image group;
synthesizing, by the mobile device, the group tag of the image group using an image in the image group;
sequentially selecting, by the mobile device, an image in the image group as the group tag of the image group; and
randomly selecting, by the mobile device, an image in the image group as the group tag of the image group.

In one example, the method of managing an image further includes:
expanding, by the mobile device, one or more images in the image group in response to a selecting operation performed by a user on the image group;
receiving, by the mobile device, a selecting operation performed by the user on the images in the image group; and
performing, by the mobile device, a bulk edit operation on the selected images according to a bulk edit instruction.

According to an example of the present disclosure, there is further provided a mobile device, including:
a processor, and
a machine-readable storage medium storing machine-executable instructions;
by reading and executing the machine-executable instructions, the processor is caused to:
   aggregate a plurality of images in response to an aggregation instruction, so as to aggregate similar images among the plurality of images into an image group; and
   display the image group.

In one example, the plurality of images includes at least one of:
continuous images; and
images selected by a user.

In one example, when aggregating the plurality of images so as to aggregate the similar images among the plurality of images into the image group, the processor is further caused by the machine-executable instructions to:
determine a similarity of the plurality of images selected according to the aggregation instruction; and
form images among the plurality of images, which are determined as similar images based on the similarity, into the image group.

In one example, the processor is further caused by the machine-executable instructions to:
reserve and display an image among the plurality of images not comprised in the image group on a display interface.

In one example, the aggregation instruction includes:
an instruction generated in response to a pinch action performed by a user on the plurality of images.

In one example, the pinch action includes:
a two-finger pinch and slip action performed by the user on a touch screen of the mobile device.

In one example, when displaying the image group, the processor is further caused by the machine-executable instructions to:
determine a group tag of the image group; and
display the image group based on the group tag.

In one example, when determining the group tag of the image group, the processor is further caused by the machine-executable instructions to execute at least one operation of:
determining a preset image as the group tag of the image group;
synthesizing the group tag of the image group using an image in the image group;
sequentially selecting an image in the image group as the group tag of the image group; and
randomly selecting an image in the image group as the group tag of the image group.

In one example, the processor is further caused by the machine-executable instructions to:
expand one or more images in the image group in response to a selecting operation performed by a user on the image group;
receive a selecting operation performed by the user on the images in the image group; and
perform a bulk edit operation on the selected images according to a bulk edit instruction.

Other examples of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method of managing an image, comprising:
aggregating, by a mobile device, a plurality of images in response to an aggregation instruction so as to aggregate similar images among the plurality of images into an image group; and
displaying, by the mobile device, the image group.

2. The method according to claim 1, wherein the plurality of images comprise at least one of:
continuous images; and
images selected by a user.

3. The method according to claim 1, wherein aggregating the plurality of images so as to aggregate the similar images among the plurality of images into the image group comprises:
determining, by the mobile device, a similarity of the plurality of images selected according to the aggregation instruction; and
forming, by the mobile device, images among the plurality of images, which are determined as similar images based on the similarity, into the image group.

4. The method according to claim 3, further comprising:
reserving and displaying, by the mobile device, an image among the plurality of images not comprised in the image group on a display interface.

5. The method according to claim 1, wherein the aggregation instruction comprises:
an instruction generated by the mobile device in response to a pinch action performed by a user on the plurality of images.

6. The method according to claim 5, wherein the pinch action comprises:
a two-finger pinch and slip action performed by the user on a touch screen of the mobile device.

7. The method according to claim 1, wherein displaying the image group comprises:
determining, by the mobile device, a group tag of the image group; and
displaying, by the mobile device, the image group based on the group tag.

8. The method according to claim 7, wherein determining the group tag of the image group comprise at least one of:
determining, by the mobile device, a preset image as the group tag of the image group;
synthesizing, by the mobile device, the group tag of the image group using an image in the image group;
sequentially selecting, by the mobile device, an image in the image group as the group tag of the image group; and
randomly selecting, by the mobile device, an image in the image group as the group tag of the image group.

9. The method according to claim 1, further comprising:
expanding, by the mobile device, one or more images in the image group in response to a selecting operation performed by a user on the image group;
receiving, by the mobile device, a selecting operation performed by the user on the images in the image group; and
performing, by the mobile device, a bulk edit operation on the selected images according to a bulk edit instruction.

10. An apparatus for managing an image, comprising:
aggregating module configured to aggregate a plurality of images in response to an aggregation instruction, so as to aggregate similar images among the plurality of images into an image group; and
first display module configured to display the image group.

11. The apparatus according to claim 10, wherein the aggregating module comprises:
aggregating submodule configured to determine a similarity of the plurality of images selected according to the aggregation instruction, and form images among the plurality of images, which are determined as similar images based on the similarity, into the image group.

12. The apparatus according to claim 11, wherein the apparatus further comprises:
second display module configured to reserve and display an image among the plurality of images not comprised in the image group on a display interface.

13. The apparatus according to claim 10, wherein
the aggregation instruction comprises:
an instruction generated in response to a pinch action performed by a user on the plurality of images;
the pinch action comprises:
a two-finger pinch and slip action performed by the user on a touch screen of the apparatus.

14. The apparatus according to claim 10, wherein the first display module is further configured to:
determine a group tag of the image group; and
display the image group based on the group tag.

15. The apparatus according to claim 10, wherein the apparatus further comprises:
an expanding module configured to expand one or more images in the image group in response to a selecting operation performed by a user on the image group;
a selecting module configured to receive a selecting operation performed by the user on the images in the image group; and
an editing module configured to perform a bulk edit operation on the selected images according to a bulk edit instruction.
